# EUROPÄISCHE PATENTSCHRIFT

(11) **EP 1 403 674 B1**
(45) Veröffentlichungstag und Bekanntmachung des Hinweises auf die Patenterteilung: **21.11.2007**
(21) Anmeldenummer: 03020426.7
(22) Anmeldetag: 11.09.2003
(51) Int. Cl.: G02B 21/00, G02B 5/00

(54) **Einstellbares Pinhole**
Adjustable pinhole
Trou d'epingle reglable

(30) Priorität: 24.09.2002 DE 10244850
(43) Veröffentlichungstag der Anmeldung: 31.03.2004
(73) Patentinhaber: CARL ZEISS JENA GmbH, 07745 Jena (DE)
(72) Erfinder: Bartzke, Karlheinz, 07749 Jena (DE); Hofmann, Jens, 99510 Apolda (DE); Klopfleisch, Karl-Heinz, 07745 Jena (DE); Wolleschensky, Ralf, 07743 Jena (DE)
(74) Vertreter: Geyer, Fehners & Partner

(56) Entgegenhaltungen:
- EP-A- 0 280 375

## Beschreibung

Die Erfindung bezieht sich auf ein einstellbares Pinhohole für den Beleuchtungs- und/oder Detektionsstrahlengang eines Laserscanningmikroskopes.

In DE 20205079 U1 ist ein scherenartiger Verschlußmechanismus für ein Pinhole beschrieben. Hier ist vor allem die Fertigungsgenauigkeit der Winkelstellen, die sich gegenüberstehen und über die Drehachse gegeneinander bewegt werden sollen, ein ernsthaftes Hindernis für eine reproduzierbare und lichtdichte Schließung und exakte quadratische Form der Pinholeöffnung.

Die EP-A-0280375 beschreibt zwei Verbunde aus jeweils rechtwinklig zueinander liegenden Platten, die gegeneinander bewegt werden. Ein vollständiges Schließen des begrenzten Pinholes ist nicht möglich.

Die Aufgabe besteht darin, ein hochgenaues Pinhole zu entwickeln, das sich lichtdicht verschließen läßt und dessen Öffnung ab der Größe Null eine quadratische Form aufweist.

Erfindungsgemäß wird dieses Problem gelöst, indem eine Anordnung aus Folienstücken, deren zur Pinholeöffnung zeigenden Kanten vorzugsweise geschliffen sind, gemäß den erfinderischen Ausführungen relativ zueinander bewegt werden. Die Begrenzung der Pinholeöffnung mit Folienkanten bietet den entscheidenden Vorteil, daß die Ränder der Pinholeöffnung vollkommen scharfkantig sind und der Krümmungsradius der Ecken null ist. Hierdurch lassen sich Pinholeöffnungen ab Größe Null reproduzierbar einstellen.

Das Vorfertigen der Folienkanten kann bereits hochgenau erfolgen, beispielsweise durch Schneiden mit Diamantschneiden oder durch Laserschneiden oder durch Ätzen.

Zur Bewegung, die sehr exakt und spielfrei ablaufen sollte, sind vorzugsweise Festkörpergelenke in Form von elastischen Stegen vorgesehen, an denen eine Verkippung oder Drehung stattfindet.

Die Erfindung gestattet überraschend eine einstellbare und reproduzierbare Verkleinerung der Größe der Pinholeöffnung ab Größe Null und dessen lichtdichten Verschluß ohne Kollisionsgefahr der Folienkanten untereinander.

Die Erfindung wird nachstehend anhand der schematischen Zeichnungen näher erläutert.

Wenn im folgenden von Folienstücken bzw. Folienkanten gesprochen wird, geht es im wesentlichen um die bei der Pinholeöffnung und / oder -Schließung gegenüberliegenden Kanten, während die übrige Form der Folienstücke je nach Platzbedarf und Ausführung variieren kann.

Das Folienmaterial kann beispielsweise Federstahl, Federbronze oder Aluminium von einer Dicke von beispielsweise 10 µm sein. Die Folienstücke können in einem Verbund, von beispielsweise 100 vorgefertigten Einzelfolien geschliffen, gestanzt und dann wieder getrennt oder auch im Anlieferzustand als Bandmaterial verwendet werden.

Fig..1a zeigt schematisch eine Abbildung von L- förmig in einem vorzugsweise rechten Winkel angeordneten Folienstücken F1-F4 , wobei F1 und F2 sowie F3 und F4 jeweils an Verbindungspunkten V1, V2 fest miteinander verbunden sind.

Sie sind an ihren den Verbindungspunkten abgewandten Enden jeweils ortsfest (schwarz mit s gekennzeichnet) auf zueinander in Pfeilrichtung verschiebbaren Grundplatten P1 und P2 befestigt, und zwar auf jeder Platte so, daß sich die Pinholeöffnung beim synchronen Bewegen der Platten P1 und P2 in Pfeilrichtung punktförmig öffnet und schließt. Die Verbindung der Folienstücke untereinander und mit den Platten P1 und P2 kann z.B. durch Kleben, Widerstandsschweißen, Diffusionschweißen oder Ultraschallschweißen erfolgen.

Durch die synchrone Verschiebung der Platten P1 und P2 in Pfeilrichtung wird erreicht, daß sich der Öffnungsbereich zwischen den an den Punkten V1, V2 verbundenen Folienstücke verkleinert oder vergrößert, und zwar wird bei Annäherung der Platten P1, P2 das Pinhole PH geöffnet und umgekehrt.

Die Pinholeöffnung schließt sich hierbei vorzugsweise quadratisch in einem Punkt. Bei weiterer Vergrößerung des Abstandes der Platten P1, P2 wird die Pinholeöffnung lichtdicht überdeckt, ohne daß sich die Folienkanten gegenseitig behindern oder beschädigen könnten.

Durch die Befestigung von jeweils zwei Folienstücken rechtwinklig übereinander ist gewährleistet, daß der durch sie gebildete rechte Winkel keinen Fertigungsproblemen unterliegt. Ein Verhaken der Folienkanten wird dadurch ausgeschlossen, daß F3 auf F4 verkürzt befestigt ist und somit nicht mit der Folienkante von F2 in Berührung kommt.

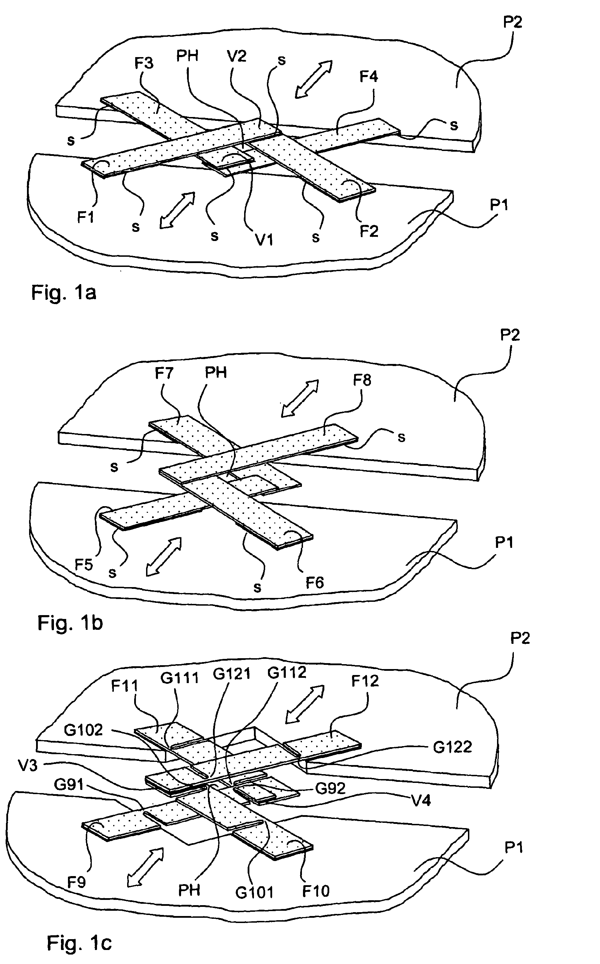

In Fig. 1b ist eine weitere Variante der Erfindung dargestellt. Sie besteht aus kreuzförmig angeordneten kreuzförmigen Folienstückes F5-F8, die jeweils an den Platten P1 (F5, F6) bzw. P2 (F7, F8) befestigt sind, wobei wiederum zwei Platten P1, P2 in Pfeilrichtung zueinander verschiebbar sind, hier jedoch bei Annäherung von P1, P2 sich das Pinhole PH schließt und umgekehrt, weil sich F6-F8 und F5-F7 scherenartig übereinderschieben, da sie nicht miteinander verbunden sind. Die Öffnung des Pinholes wird hier von den jeweils den Plattenkanten abgewandten Ecken der Foilienanordnungen gebildet.

In Fig. 1c ist eine weitere Variante der Erfindung dargestellt. Jede der Folienstücke F9, F10, F11, F12 weist zwei Gelenke auf, bevorzugt Festkörpergelenke. Der Abstand der Gelene G91 zu G92, G101 zu G102, G111 zu G112 und G121 zu G122 sei vorzugsweise gleich und viel größer als die Pinholeöffnung. Die Folienstückpaare F9IF11 und F10/F12 sind jeweils zu einer L-Form an Ihren Verbindungsstellen V3 und V4 verbunden und kreuzförmig so auf den Platten P1, P2 befestigt, daß beim synchronen Öffnen der Platten P1 und P2 in Pfeilrichtung die Pinholeöffnung punktförmig und vorzugeweise quadratisch schließt und umgekehrt. Das erfolgt dadurch, daß sich bei synchroner Vergrößerung des Abstandes der Platten P1, P2 in Pfeilrichtung die Gelenkpunkte G92 und G102, G112 und G121 senkrecht zur Pfeilrichtung aufeinanderzubewegen und die Pinholeöffnung schließen und umgekehrt. Hierbei öffnen und Schließen sich die verbiegbaren Gelenkeinkerbungen an den Folien. Beim Öffnen und Schließen des Pinholes bleibt die Form der Pinholeöffnung annähernd quadratisch.

Bei Vergrößerung des Abstandes der Platten P1, P2 wird die Pinholeöffnung schließlich lichtdicht überdeckt, ohne daß sich die Folienkanten gegenseitig behindern oder zerstören könnten.

Ein Verhaken der Folienkanten wird dadurch ausgeschlossen, daß F9 auf F11 verkürzt befestigt ist und somit nicht mit der Folienkante von F12 in Berührung kommt.

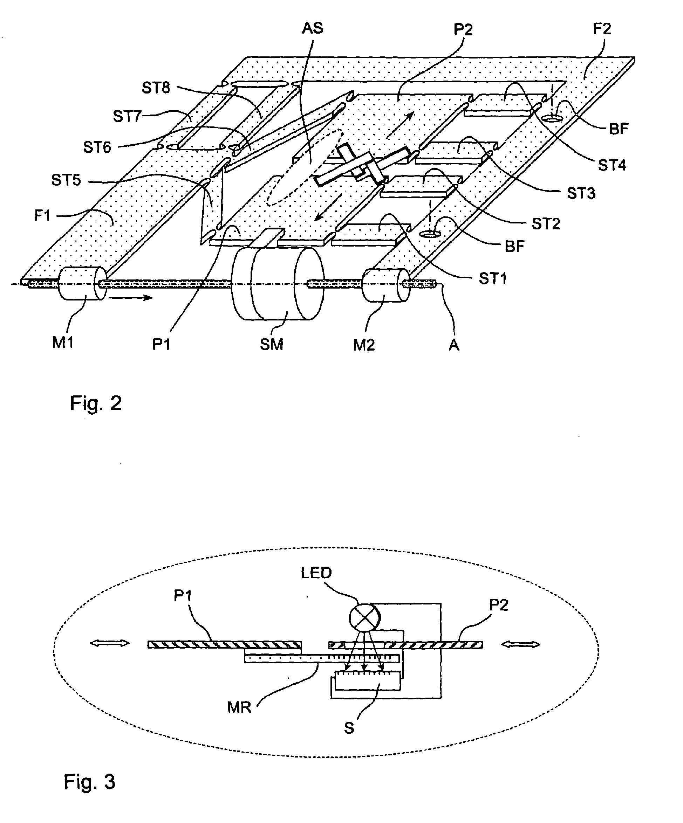

In Fig. 2 ist eine Anordnung zur Pinholeeinstellung dargestellt, die sich auf eine Anordnung der Folienstücke gemäß Fig. 1a bezieht. Die Verschiebung der Platten P1, P2 kann jedoch analog bei Anwendung der Folienstückanordnung gemäß Fig. 1 b, c erfolgen.

Hier ist ein lediglich an der Platte P1 drehgesicherter Schrittmotor SM dargestellt, der Spindeln SP1 und SP2 antreibt, die Gewinde mit unterschiedlichen Steigungen aufweisen und die über Muttern M1 und M2, eine Bewegung des mit P1 und P2 verbundenen Führungsteiles F1 senkrecht zur Verstellbewegung von P1, P2 bewirken. Die Teile F1, F2, P1, P2 sind hierbei vorzugsweise aus einem Stück gefertigt und untereinander durch federnde Stege (Parallelfedergelenke) verbunden. Die Fertigung der Teile kann z.B. durch Laserschneiden, Ätzen, Erodieren oder Stanzen erfolgen.

Der Schrittmotor SM ist zur Platte P1 drehgesichert und frei verschiebbar angeordnet. Er treibt synchron die Spindeln SP1 und SP2 an, die Gewinde mit unterschiedlichen Steigungen aufweisen.(z.B. ergibt sich mit den Gewinden M3x0, 5 und M2,6x0,45 eine Differenzsteigung von 50 µm).

Spindel SP 2 schraubt sich, angetrieben durch Schrittmotor SM, in die am Rahmen F2 befestigte Mutter M2. Der drehgesicherte Schrittmotor SM verschiebt sich daraufhin entlang der Achse A um die Spindelverschiebung in die Pfeilrichtung. Mutter M1, die am Führungsteil F1 befestigt ist, verschiebt sich aufgrund des Differenzgewindes um einen Betrag, der ca. 10 mal kleiner ist als der des Schrittmotors SM, zur Mutter M2. Das bewirkt eine sehr hohe Feinfühligkeit bei der Verstellung von F1.

Am Führungsteil F1, das durch Federstege (Parallelfedergelenk) mit dem Rahmen F2 verbunden ist, sind die schrägen Federstege ST5, ST6 befestigt, die beim Drehen der Motorwelle sich spreizen oder schließen und die Platten P1, P2 und damit das Pinhole öffnen oder schließen.

Während der Rahmen F2 über mehrere Stege ST1-ST4 (2 Parallelfedergelenke) mit den Platten P1, P2 zu deren Parallelführung verbunden ist, sind die Platten P1, P2 mit F1 jeweils über federnd gelagerte Stege ST5, ST6 verbunden, die schräg zur Verschieberichtung von P1 und P2 und schräg zu F1, F2 angeordnet sind.

Hierdurch wird erreicht, daß eine Verschiebung von F1 in Pfeilrichtung in eine hierzu senkrechte und antiparallele Verschiebung der Platten P1 und P2 umgewandelt wird und die resultierende Verstellung der Pinholeöffnung gemäß Fig. 1 erfolgt.

In Fig. 2 ist schematisch ein Ausbruch AS dargestellt, in dem sich ein Wegmeßsystem befinden kann, wie es in Fig.3 beispielhaft dargestellt ist. Es mißt die Relativbewegung der Platten P1, P2 zueinander und damit die Größe der Diagonalen der Pinholeöffnung.

Fest auf Platte P2 ist eine Lichtquelle LED angeordnet, der ebenfalls auf P2 gegenüber ein ortsauflösender Sensor S zugeordnet ist, der die Bewegung eines mit der zu P2 beweglichen Platte P1 verbundenen Maßstabes MR, hier ein transparenter Rastermaßstab, anhand der Rasterveränderung erfaßt.

Derartige Meßsysteme sind handelsüblich mit einer Genauigkeit ab 0,1 µm erhältlich. Solche handelsüblichen Meßsysteme ermöglichen zusätzlich die Referenzierung des Schrittmotorantriebes.

Anhand der erfaßten Relativbewegung der Platten P1, P2 kann dadurch online die der tatsächliche Pinholeöffnung erfaßt werden und auch mit einer optischen Messung bei verschiedenen Pinholeöffnungszuständen korreliert werden.

Eine Referenzierung des Schrittmotorantriebes kann in einfacher Weise auch dadurch erfolgen, daß ein zusätzlicher, nicht dargestellter optischer Detektor das beim Öffnen des Pinholes von einer nicht dargestellten Lichtquelle durch die Pinholeöffnung hindurchtretende Licht erfaßt und in diesem Moment die Referenzierung des Schrittmotorantriebes hochgenau auslöst.

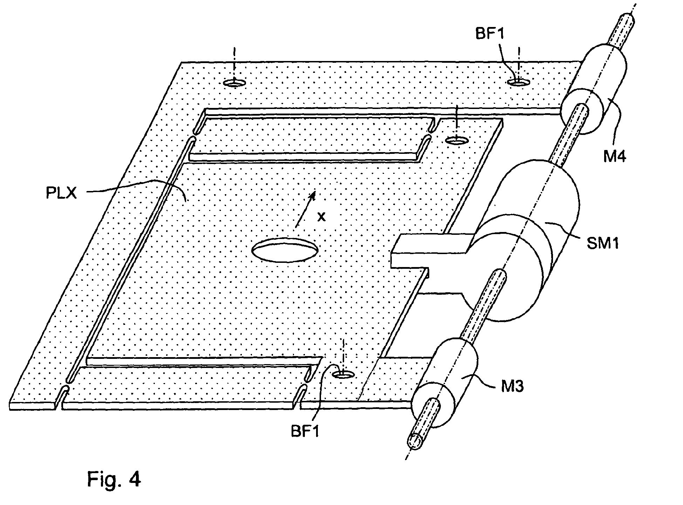

In Fig. 4 ist ein Spindeltrieb, bestehend aus einem Schrittmotor SM1 und Muttern M3, M4 dargestellt, der eine Bewegung einer Platte PLX in X-Richtung gewährleistet. Diese Platte ist beispielsweise über Befestigungspunkte BF1 mit Befestigungspunkten auf der Verschiebeeinrichtung gemäß Fig. 2 verbunden, so daß die gesamte Pinholeanordnung gemäß Fig. 2 in X - Richtung - und mit einer weiteren Anordnung, die mit der Anordnung gemäß Fig.4 verbunden sein kann, auch in Y- Richtung verschiebbar ist. Hierdurch ist eine X- und Y - Verschiebung des Pinholes senkrecht zur optischen Achse, beispielsweise zu Zentrierungszwecken, gewährleistet.

## Patentansprüche

1. Einstellbares Pinhole für den Beleuchtungs- und/oder Detektionsstrahlengang eines Laser-Scanning-Mikroskopes, umfassend
- zwei Platten (1, 2), welche gegeneinander verschiebbar sind und deren Oberflächen in einer Ebene liegen,
- zwei Folienstücke (F1 - F12), die streifenförmig mit jeweils zwei geraden Längs- und zwei Querkanten und aufeinanderliegend verbunden sind, wobei die Längskanten eine L-Form beschreiben, und die Enden der L-Form an den Oberflächen der Platten befestigt sind und
- zwei solche L-förmige Verbunde (F1, F2; F3, F4; F5, F7; F6, F8; F9, F11; F10, F12) so aufeinanderliegend angeordnet sind, daß sie einen als Pinhole (PH) wirkenden, rhombischen oder quadratischen Lichtdurchtritt umgrenzen, so daß das Pinhole (PH) durch Folienkanten begrenzt ist, welche mittels Verschiebung der Platten (1, 2) zueinander verstellbar sind, und
- die Verbunde zueinander zur Pinholeverstellung bewegbar sind, wobei das Pinhole (PH) lichtdicht schließbar ist, indem sich die Folienstücke überlappen, wobei
- im untenliegenden Verbund (F3, F4; F5, F7; F9, F11) zum Kollisionsschutz das obere Folienstück (F3, F5, F9) mit seiner Querkante von der Längskante des unteren Folienstücks (F4, F7, F11), die der das Pinhole (PH) begrenzenden Längskante gegenüberliegt, auf die das Pinhole (PH) begrenzende Längskante des unteren Folienstücks hin versetzt ist, so daß die das Pinhole (PH) begrenzende Längskante dieses oberen Folienstücks beim Schließen nicht mit der gegenüberliegenden Folienkante des obenliegenden Verbundes (F1, F2; F6, F8; F10, F12) in Berührung kommt.

2. Pinhole nach Anspruch 1, wobei die Bewegung in Richtung der Winkelhalbierenden des durch die L-Form aufgespannten Winkels oder einer anderen innerhalb des aufgespannten Winkels liegenden Richtung erfolgt.

3. Pinhole nach einem der obigen Ansprüche, wobei die Folienstücke (F9 - F12) Festkörpergelenke (G91, G92; G101, G102; G111, G112; G121, G122) aufweisen.

4. Pinhole nach einem der obigen Ansprüche, wobei zur Verstellung motorisch antreibbare Festkörpergelenke vorgesehen sind.

5. Pinhole nach einem der obigen Ansprüche, mit einem Schrittmotor (SM) zur Pinholeverstellung, der über mindestens zwei gleichsinniglaufende Spindeln, vorzugsweise mit unterschiedlicher Steigung, verschiebbare Platten (P1, P2) antreibt, an denen die Folienstücke (F1 - F12) befestigt sind.

6. Pinhole nach einem der obigen Ansprüche, mit einem Wegmeßsystem und/oder einem optischen Detektor zur Erfassung der durch das Pinhole (PH) hindurchtretenden Lichtmenge und zur Referenzierung eines Schrittmotorantriebes der Pinholeverstellung.

7. Pinhole nach einem der obigen Ansprüche, wobei die die das Pinhole (PH) begrenzenden Folienkanten geschliffen sind.

## Claims

1. An adjustable pinhole for the illumination beam path and/or detection beam path of a laser scanning microscope, said pinhole comprising
- two plates (1, 2), which are displaceable relative to each other and whose surfaces are located in one plane,
- two pieces of foil (F1 - F12), which are connected to each other, in the form of strips, at two straight longitudinal edges and two transverse edges, respectively, and placed on top of each other, with the longitudinal edges describing an L shape and the ends of said L shape being fixed to the surfaces of the plates, and
- two such L-shaped compounds (F1, F2; F3, F4; F5, F7; F6, F8; F9, F11; F10, F12) are placed on top of each other such that they circumscribe an orthorhombic or square light passage acting as a pinhole (PH), so that the pinhole (PH) is limited by foil edges which are adjustable relative to each other when shifting the plates (1, 2), and
- the compounds are movable relative to each other for adjustment of the pinhole, with the pinhole (PH) being closable in a light-tight manner by the pieces of foil overlapping, wherein
- for collision protection, the transverse edge of the upper piece of foil (F3, F5, F9) in the lowermost compound (F3, F4; F5, F7; F9, F11) is offset relative to that longitudinal edge of the lower piece of foil (F4, F7, F11) which is located opposite the longitudinal edge limiting the pinhole (PH), said offset being in the direction of that longitudinal edge of the lower piece of foil which limits the pinhole (PH), so that the longitudinal of said upper piece of foil which limits the pinhole (PH) does not touch the opposite foil edge of the uppermost compound (F1, F2; F6, F8; F10, F12) during closing.

2. The pinhole according to claim 1, wherein movement is effected in the direction of the bisecting line of the angle spanned by the L shape or in any other direction located within the spanned angle.

3. The pinhole according to any one of the above claims, wherein the pieces of foil (F9 - F12) comprise living hinges (G91, G92; G101, G102; G111, G112; G121, G122).

4. The pinhole according to any one of the above claims, wherein motor-driven living hinges are provided for adjustment.

5. The pinhole according to any one of the above claims, comprising a stepping motor (SM) for pinhole adjustment, which motor drives plates (P1, P2) which are movable via at least two screws rotating in the same direction, preferably differing in pitch, said plates (P1, P2) having the pieces of foil (F1 - F12) mounted to them.

6. The pinhole according to any one of the above claims, comprising a path-measuring system and/or an optical detector for detection of the amount of light passing through the pinhole (PH) and for referencing a stepping motor drive of the pinhole adjustment.

7. The pinhole according to any one of the above claims, wherein the foil edges limiting the pinhole (PH) are sharpened.

## Revendications

1. Trou d'épingle réglable pour un parcours optique d'éclairage et/ou de détection d'un microscope à balayage laser, comprenant
- deux plaques (1, 2) déplaçables l'une vers l'autre et dont les surfaces sont situées sur un plan,
- deux pièces de film (F1 - F12) en forme de bande avec deux bords longitudinaux et deux bords transversaux droits et raccordées par superposition, les bords longitudinaux décrivant une forme en L, et les extrémités de la forme en L étant fixées sur les surfaces des plaques, et
- deux de ces raccords en L (F1, F2 ; F3, F4 ; F5, F7 ; F6, F8 ; F9, F11 ; F10, F12) étant superposés de manière à délimiter un passage lumineux rhombique ou carré ayant fonction de trou d'aiguille (PH), si bien que le trou d'aiguille (PH) est limité par des bords de film déplaçables l'un relativement à l'autre par coulissement des plaques (1, 2), et
- les raccords étant déplaçables l'un relativement à l'autre pour le réglage du trou d'aiguille, ledit trou d'aiguille (PH) étant obturable, pour ne pas laisser passer la lumière, par chevauchement des pièces de film, où,
- pour éviter une collision, la pièce de film supérieure (F3, F5, F9) du raccord inférieur (F3, F4 ; F5, F7 ; F9, F11) est décalée par son bord transversal du bord longitudinal de la pièce de film inférieure (F4, F7, F11) opposé au bord longitudinal délimitant le trou d'aiguille (PH), vers le bord longitudinal délimitant le trou d'aiguille (PH) de la pièce de film inférieure, de telle manière que le bord longitudinal délimitant le trou d'aiguille (PH) de ladite pièce de film supérieure n'entre pas en contact avec le bord de film opposé du raccord supérieur (F1, F2 ; F6, F8 ; F10, F12) lors de l'obturation.

2. Trou d'aiguille selon la revendication 1, où le déplacement est exécuté en direction de la bissectrice de l'angle compris dans la forme en L ou dans une autre direction à l'intérieur de l'angle formé.

3. Trou d'aiguille selon l'une des revendications précédentes, où les pièces de film (F9 - F12) comportent des articulations à corps solides (G91, G92 ; G101, G102 ; G111, G112 ; G121, G122).

4. Trou d'aiguille selon l'une des revendications précédentes, où des articulations à corps solides motorisées sont prévues pour le réglage.

5. Trou d'aiguille selon l'une des revendications précédentes, avec un moteur pas à pas (SM) pour le réglage du trou d'aiguille, entraînant des plaques coulissantes (P1, P2) sur lesquelles les pièces de films (F1 - F12) sont fixées par au moins deux arbres ayant le même sens de rotation, de préférence pourvus de pas différents.

6. Trou d'aiguille selon l'une des revendications précédentes, avec un capteur de position et/ou un détecteur optique pour la détermination de la quantité de lumière traversant le trou d'aiguille (PH) et pour le référencement d'un entraînement de moteur pas à pas du réglage de trou d'aiguille.

7. Trou d'aiguille selon l'une des revendications précédentes, où les bords de film délimitant le trou d'aiguille (PH) sont rectifiés.
